# NEW EUROPEAN PATENT SPECIFICATION

(11) **EP 2 383 132 B2**
(45) Date of publication and mention of the opposition decision: **17.05.2017**
(45) Mention of the grant of the patent: 11.07.2012
(21) Application number: 11159575.7
(22) Date of filing: 24.03.2011
(51) Int. Cl.: B60J 7/00

(54) **Shade apparatus for vehicle**
Sonnenblendenvorrichtung für Fahrzeug
Appareil pare-soleil pour véhicule

(30) Priority: 28.04.2010 JP 2010104257
(43) Date of publication of application: 02.11.2011
(73) Proprietor: AISIN SEIKI KABUSHIKI KAISHA, Kariya-shi, Aichi-ken 448-8650 (JP)
(72) Inventor: Sasaki, Takuya, Toyota-shi, Aichi-ken, 471-8571 (JP); Kitani, Takashi, Kariya-shi, Aichi-ken, 448-8650 (JP); Nakamura, Yoshitaka, Kariya-shi, Aichi-ken, 448-8650 (JP); Matsushita, Jun, Kariya-shi, Aichi-ken, 448-0027 (JP); Umeki, Takayuki, Kariya-shi, Aichi-ken, 448-8650 (JP)
(74) Representative: Winter, Brandl, Fürniss, Hübner, Röss, Kaiser, Polte - Partnerschaft mbB

(56) References cited:
- EP-A1- 1 449 692
- EP-A1- 1 953 018
- EP-A1- 2 335 956
- WO-A1-2007/137338
- WO-A1-2010/088955
- DE-A1- 10 046 553
- DE-A1- 10 240 582
- DE-A1-102005 024 657
- DE-A1-102005 030 973
- DE-A1-102005 030 973
- DE-A1-102005 038 373
- DE-A1-102006 048 459
- DE-A1-102007 019 741
- US-B2- 7 114 767

## Description

### TECHNICAL FIELD

This disclosure generally relates to a shade apparatus for a vehicle as e.g. described in document DE 10 2006 048 459 A1.

### BACKGROUND DISCUSSION

Disclosed in JP3146520U is a sunshade apparatus for a vehicle, which is configured so as to include a pair of rails, a roller, a screen (a shade) and a base member as sunshade components, which are assembled at a roof of a vehicle. The roller is provided at one end portion of the respective rails in a longitudinal direction thereof so as to extend in a direction orthogonal to the longitudinal direction. The screen (the shade) is operated between a rolling state where the screen is wound around the roller and a stretched state where the screen is reeled out from the roller. The base member is provided at one of four edge portions of the screen so as to be slidably movable within recessed portions of the respective rails.

According to the sunshade apparatus disclosed in JP3146520U, a rolling force of the roller acts on a portion of the screen positioned in the vicinity of the roller. Therefore, a tensile force generated on the screen becomes strong in the longitudinal direction of the rail, which corresponds to a reel out direction of the roller. However, the tensile force generated on the screen becomes weak in a direction orthogonal to the longitudinal direction of the rail. As a result, the screen may look as if the screen droops (i.e. as if a center portion of the screen loosens) while the screen is in the stretched state.

Specifically, in a case where the rail is formed to curve so as to correspond to a shape of the vehicle roof, which is formed so as to curve in an upward direction of the vehicle, the screen is likely to droop (loosen) along a line connecting end points of an arc because of the rolling force of the roller acting on the shade. In other words, in this case, the screen is not likely to be reeled out along a shape of the rails and the screen may look like as if drooping. Furthermore, reference is made to EP 1 582 386 A2 as being the one most closely related to the subject matter of claim.

A need thus exists to provide a shade apparatus for a vehicle, which is configured so that a shade member does not droop while being operated in order to improve a presentation of the shade member when being in a stretched state. Furthermore, a sliding resistance generated between the shade member and the guiding rails shall be reduced.

### SUMMARY

According to an aspect of this disclosure, a shade apparatus configured so as to be assembled at a sunroof of a vehicle includes a first rail including a guide groove extending in a longitudinal direction of the first rail, a second rail including a guide groove extending in a longitudinal direction of the second rail and arranged so as to keep a first distance from the first rail in a direction orthogonal to the longitudinal direction, a roller shaft provided at one end portions of the respective first and second rails in the longitudinal direction and arranged so as to extend in the direction orthogonal to the longitudinal direction, a shade member configured so as to be reeled on the roller shaft and reeled out from the roller shaft when the shade member is operated, a first sliding member provided at the shade member, arranged so as to extend in a reel out direction of the shade member, and being provided within the corresponding guide groove to be slidable within the corresponding guide groove of the first rail, and a second sliding member provided at the shade member, arranged so as to extend in the reel out direction of the shade member while keeping a second distance from the first sliding member in an axial direction of the roller shaft, and being provided within the corresponding guide groove to be slidable within the corresponding guide grooves of the second rail, wherein the first distance between the first and second rails is set to be relatively greater at a portion of the first and second rails in the longitudinal direction than the second distance between the first and second sliding members being in a natural state, by a width such that in case where the sliding members are engaged with the corresponding guide grooves of the respective rails the shade member is stretched by the width in the vehicle width direction.

Accordingly, because the first and second sliding members are engaged within the corresponding guide grooves of the respective first and second rails, a tensile force generated at the shade members in the direction orthogonal to the longitudinal direction of the first and second rails may be increased.

Accordingly, the shade member is avoided from drooping in a downward direction of the vehicle while being operated, so that a level of an appearance (a presentation) of the shade member may be improved.

According to a further aspect of this disclosure, each of the first and second sliding members is made of an elastic member.

Accordingly, because each of the first and second sliding members is made of the elastic member, an unevenness of the second distance between the first and second sliding members in the natural state may be absorbed.

Accordingly, the tensile force generated at the shade member may be easily equalized in the diction orthogonal to the longitudinal direction of the first and second rails.

Furthermore, according to the invention the first distance between the first and second rails is set to be constant and the second distance between the first and second sliding members in the natural state is set to gradually change depending on positions of the first and second sliding members in the reel out direction of the shade member.

Accordingly, a sliding resistance generated between the first and second sliding members on the one hand and the corresponding guide grooves of the respective first and second rails on the other hand may be increased at the portion of the shade member where the tensile force generated thereat is great, and the sliding resistance generated between the first and second sliding members on the one hand and the corresponding guide grooves of the respective first and second rails on the other hand may be reduced at the portion of the shade members where the tensile force generated thereat is small.

Accordingly, chances of an occurrence of a malfunction and the like occurring when the shade member is reeled and reeled out may be reduced.

According to a further aspect of this disclosure, the first distance between the first and second rails is set to be constant and the second distance between the first and second sliding members in the natural state is set to locally change at a portion of the first and second sliding members in the reel out direction of the shade member.

Accordingly, the sliding resistance generated between the first and second sliding members on the one hand and the corresponding guide grooves of the respective first and second rails on the other hand may be increased at the portion of the shade member where the tensile force generated thereat is great, and the sliding resistance generated between the first and second sliding members on the one hand and the corresponding guide grooves of the respective first and second rails on the other hand may be reduced at the portion of the shade members where the tensile force generated thereat is small.

Accordingly, the chances of the occurrence of the malfunction and the like occurring when the shade member is reeled and reeled out may be reduced.

According to a further aspect of this disclosure, each of the first and second rails is formed to curve in an upward direction of the vehicle.

Accordingly, because each of the first and second rails is formed so as to curve in the upward direction of the vehicle, the shade member may be reeled out along a roof, which is generally formed to curve in the upward direction of the vehicle, while avoiding a droop of the reeled out shade member in the downward direction of the vehicle.

Accordingly, the presentation of the shade member when being operated may be further improved.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view illustrating a vehicle having a shade apparatus for the vehicle according to an embodiment;
Fig. 2 is a perspective view illustrating the shade apparatus for the vehicle according to the embodiment;
Fig. 3 is a partially enlarged cross-sectional diagram of the shade apparatus for the vehicle taken along line III-III in Fig. 2;
Fig. 4 is a perspective view schematically illustrating a tensile force generated at a shade member;
Fig. 5 is a bottom view schematically illustrating an example of gradual changes in distance between a pair of slide members provided at a shade member while being in a natural state in response to changes in positions in a reel out direction of the shade member according to the embodiment; and
Fig. 6 is a perspective view schematically illustrating a tensile force generated at a shade member according to a known shade apparatus.

### DETAILED DESCRIPTION

Embodiments of a shade apparatus for a vehicle will be described below with reference to the attached drawings.

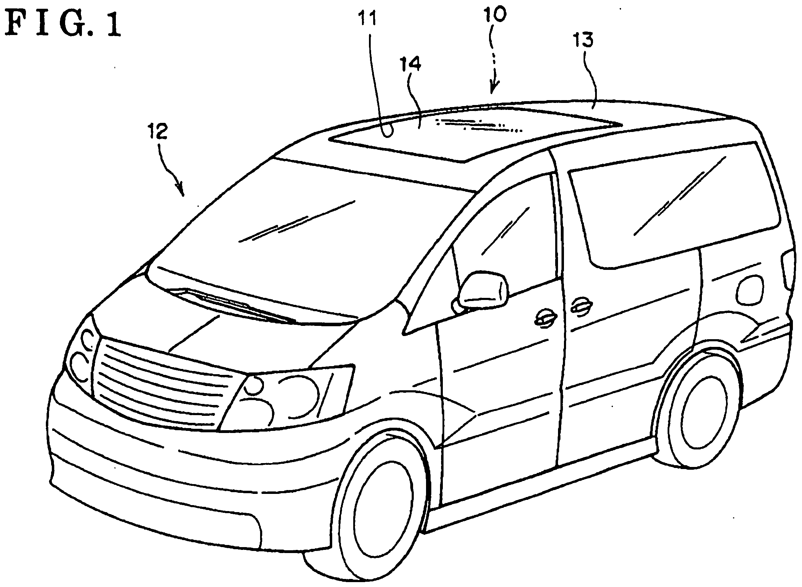

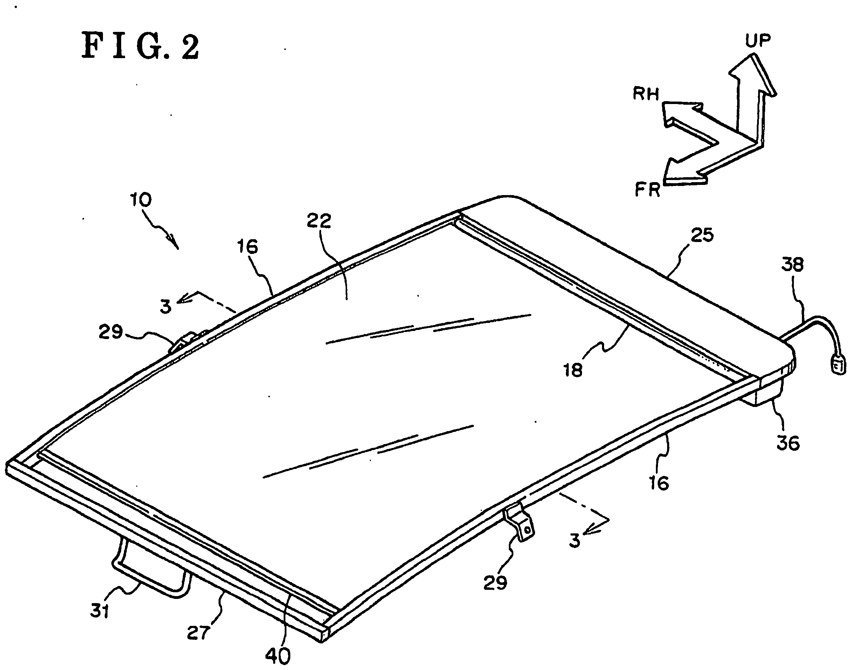

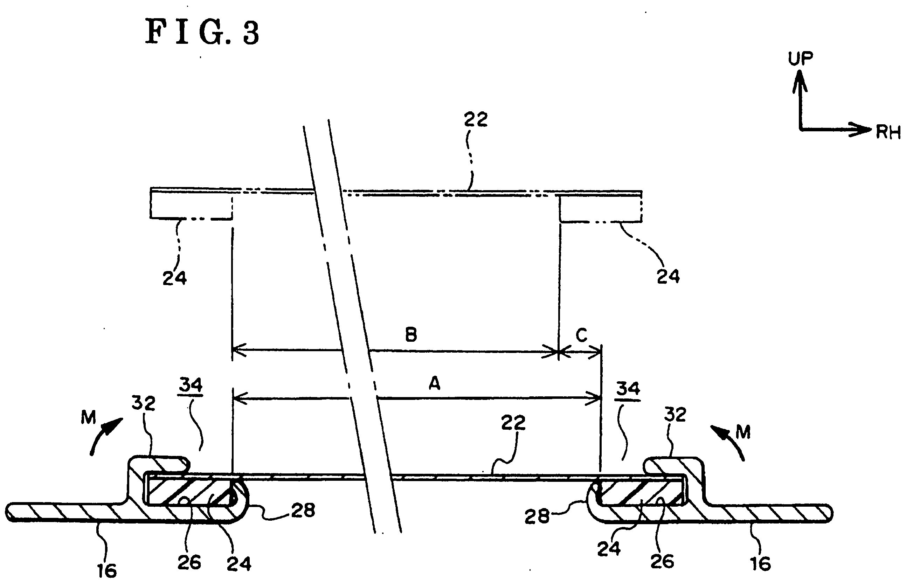

As illustrated in Fig. 1, a shade apparatus for a vehicle (which will be hereinafter referred to simply as a shade apparatus 10) according to an embodiment is configured so as to be assembled at a sunroof 14 of a vehicle 12 as a sunshade apparatus for partially and fully opening and closing an opening portion 11 formed at a roof 13 (i.e. a roof panel). More specifically, as illustrated in Fig. 2, the shade apparatus 10 includes a pair of rails 16 (i.e. a first rail member and a second rail member), a roller shaft 18, a shade member 22 and a pair of sliding members 24 (i.e. a first sliding member and a second sliding member) (see Fig. 3).

The pair of the rails 16 are provided at end portions of the sunroof 14 (see Fig. 1) in a vehicle width direction, respectively, so that a longitudinal direction of the pair of the rails 16 corresponds to a front-rear direction of the vehicle. Furthermore, as illustrated in Fig. 2, the pair of the rails 16 are arranged so as to keep a first distance A therebetween in a direction orthogonal to the longitudinal direction. The distance A between the rails 16 (see Fig. 3) is set to be constant, in other words, the pair of the rails 16 are arranged in parallel with each other while keeping the constant first distance A therebetween in the vehicle width direction. End portions (first and second end portions) of each of the rails 16 in the longitudinal direction are connected to a first connecting member 25 and a second connecting member 27, respectively. The first connecting member 25 and the second connecting members 27 are arranged so as to keep a distance therebetween in the front-rear direction of the vehicle. More specifically, the first end portion and the second end portion of each of the rails 16 are connected to an end portion of the first connecting member 25 and an end portion of the second connecting member 27 in the vehicle width direction, respectively. Each of the rails 16 includes a first bracket 29 and the second connecting member 27 includes a second bracket 31 in order to assemble the shade apparatus 10 to the roof 13 (see Fig. 1) or to the sunroof 14. Additionally, each of the rails 16 is formed so as to curve in an upward direction of the vehicle when being viewed from a side of the vehicle so as to correspond to a cross-sectional shape of the roof 13 of the vehicle 12 (see Fig. 1).

As illustrated in Fig. 3, each of the rails 16 includes a guide groove 26 that extends in the longitudinal direction. The sliding member 24 is provided within the guide groove 26 of each of the rails 16 so that the sliding member 24 slidably moves along the guide groove 26 of each of the rails 16. An inner wall portion 28 is formed at an inner end portion of the guide groove 26 in the vehicle width direction and an upper wall portion 32 is formed at each of the rails 16 so as to cover a portion of the corresponding guide groove 26 in order to prevent the corresponding sliding member 24 from being disengaged from the guide groove 26.

More specifically, the inner wall portion 28 is formed adjacent to the inner end portion of the guide groove 26 in the vehicle width direction so as to for example, extend in the upward direction of the vehicle. On the other hand, the upper wall portion 32 is formed adjacent to the outer end portion of the guide groove 26 in the vehicle width direction so as to, for example, extend in the upward direction of the vehicle and then in an inward direction of the vehicle width direction so as to cover the portion of the corresponding guide groove 26. Accordingly, a clearance 34 is formed between the inner wall portion 28 and the upper wall portion 32 of each of the rails 16, so that the guiding member 24 is provided within the guide groove 26 from the clearance 34. Additionally, a pair of the inner wall portion 28 and the upper wall portion 32 of each of the rails 16 configure opposing wall portions.

The roller shaft 18 is provided at the first end portions of the respective rails 16 so as to extend in, for example, the direction orthogonal to the longitudinal direction of the rails 16, in other words, in the vehicle width direction orthogonal to the longitudinal direction. Accordingly, an axial direction of the roller shaft 18 corresponds to the vehicle width direction. A length of the roller shaft 18 is set to correspond to a size of the shade member 22 in the vehicle width direction. Furthermore, the roller shaft 18 is biased in a reeling direction (i.e. a direction of reeling the shade member 22) by means of a spring, so that the roller shaft 18 is actuated in a reel out direction (i.e. a direction of reeling out the shade member 22) by a driving motor, which is provided within a case 36, in a case where the shade member 22 is operated. The driving motor is configured so that an operation electric current is supplied thereto via a wire harness 38. In this embodiment, the shade apparatus 10 is configured so as to be electrically operated. However, the shade apparatus 10 may be configured so as to be manually operated.

A cloth screen having a light blocking effect is adapted as the shade member 22, which is configured so as to be reeled by the roller shaft 18 and so as to be reeled out from the roller shaft 18 when the shade member 22 is operated (see Figs. 2 and 3). Furthermore, the shade member 22 has slight stretching properties in the vehicle width direction. A reinforcement member 40, which extends in the vehicle width direction, is provided at a front end portion of the shade member 22 in the front-rear direction of the vehicle. As illustrated in Fig. 2, a droop (a loosening) of the front end portion of the shade member 22 is prevented by the reinforcement member 40, so that a level of an appearance (a presentation) of the front end portion of the shade member 22 is improved.

As illustrated in Fig. 3, the pair of the sliding members 24 are provided at the shade member 22 so as to extend in the reel out direction of the shade member 22 while keeping a distance from each other in the axial direction of the roller shaft 18 (i.e. the vehicle width direction). More specifically, the sliding members 24 are provided at end portions (i.e. first and second end portions) of the shade member 22 in the vehicle width direction, respectively. Furthermore, the pair of the sliding members 24 are provided within the respective guide grooves 26, which are formed at the respective rails 16, so as to be slidable therewithin. Each of the sliding members 24 is made of an elastic member such as an elastomer and the like so as to have a predetermined thickness and a predetermined elasticity in order to allow each of the sliding members 24 to be reeled on the roller shaft 18 together with the shade member 22 when the shade member 22 is reeled to be accommodated. Still further, the pair of the sliding members 24 are fixed at a lower surface of the shade member 22 by, for example, being sewed thereon.

A second distance B between the sliding members 24 while being in a natural state is set. The natural state refers to a state where the sliding members 24 are not engaged within the corresponding guide grooves 26 of the respective rails 16, as illustrated by a chain double-dashed line in Fig. 3.

The first distance A between the rails 16 is set to be wider than the second distance B between the sliding members 24 in the natural state along an entire length of the rails 16 in the longitudinal direction thereof. More specifically, the first distance A between the rails 16 is set to be wider than the second distance B between the sliding members 24 by a width C. Therefore, as indicated by a solid line in Fig. 3, in a case where the sliding members 24 are engaged with the corresponding guide grooves 26 of the respective rails 16, the shade member 22 is stretched by the width C in the vehicle width direction. Accordingly, a tensile force is generated at the shade member 22 in the vehicle width direction. Hence, a mutual geometrical relationship between the rails 16 and the respective sliding members 24 configures a tensile force generating mechanism. Additionally, the width C is set in response to the tensile force necessary to be generated at the shade member 22 in the vehicle width direction.

### [Advantages and merits]

Advantages and merits of the shade apparatus 10 having the above-described configuration will be described below. The shade apparatus 10 is configured so that the sliding members 24, which are provided at the shade member 22, are slidably moved within the corresponding guide grooves 26 of the respective rails 16 in the case where the shade member 22 is reeled out and reeled on the roller shaft 18 (see Figs. 2 and 3).

As illustrated in Fig. 3, the first distance A between the rails 16 is set to be relatively longer than the second distance B between the sliding members 24 along the entire length of the rails 16 in the longitudinal direction thereof. Furthermore, the rails 16 are arranged in parallel with each other.

In this case, the tensile force generated at the shade member 22 in the vehicle width direction is received by the inner wall portions 28, which are provided at the corresponding inner end portions of the respective guide grooves 26 in the vehicle width direction. Furthermore, a moment M generated at a contacting portion between each of the sliding member 24 and each of the inner wall portions 28 is received by the corresponding upper wall portion 32, which is provided at the upper end portion of the corresponding guide groove 26. Accordingly, a disengagement of the sliding members 24 from the respective guide grooves 26 may be avoided, so that the tensile force is stably generated at the shade member 22 in the vehicle width direction.

In this embodiment, each of the sliding members 24 is made of the elastic member. Accordingly, unevenness of the second distance B between the sliding members 24 in the natural state may be absorbed. As a result, the tensile force may be easily and equally generated at the shade member 22 in the vehicle width direction.

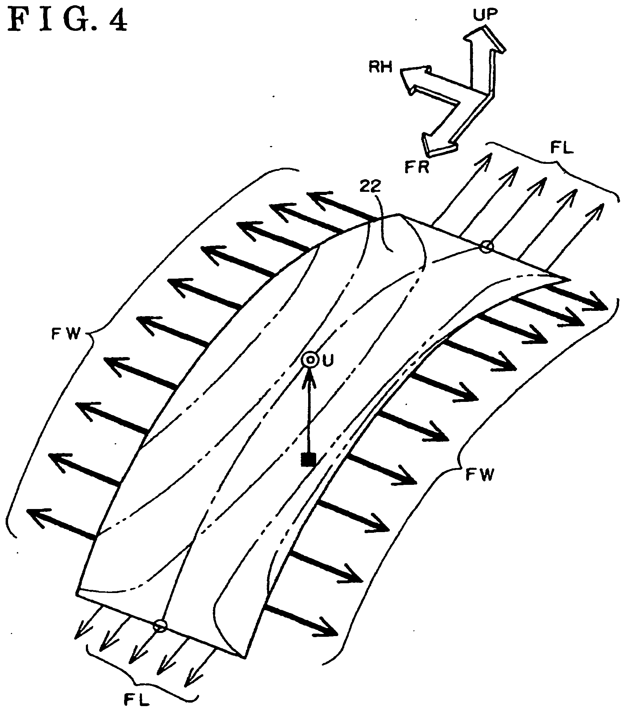

The tensile force generated at the shade member 22 and the advantages and merits generated by the tensile force will be described below in more detail. As illustrated in Fig. 1, generally, the roof 13 of the vehicle 12 is formed so as to curve in the upward direction of the vehicle. Therefore, as illustrated in Fig. 2, the rails 16 are also formed so as to curve in the upward direction of the vehicle. In the case where the shade member 22 is reeled out along the rails 16, which are formed to curve, a tensile force FL is equally generated at the shade member 22 in the front-rear direction of the vehicle as illustrated in Fig. 4. Accordingly, in a known shade apparatus, the shade member 22 is likely to droop (loosen) along a line connecting two end points of an arc, rather than being deployed along the shape of the rails 16. Therefore, in the known shade apparatus, the shade member 22 may look as if drooping along a contour line indicated by a chain double-dotted line in Fig. 4.

However, according to this embodiment, a tensile force FW generated at the shade member 22 in the vehicle width direction may be increased. Therefore, a height position of a center portion of the shade member 22 is pulled up in the upward direction of the vehicle (i.e. in a direction indicated by an arrow U in Fig. 4), so that the droop of the shade member 22 in a downward direction of the vehicle 12 may be avoided. Accordingly, the shade member 22 may be reeled out along the roof 13 formed so as to curve in the upward direction of the vehicle 12 (see Fig. 1) while avoiding the shade member 22 from drooping. Hence, the presentation of the shade member 22 while being operated may be increased. Specifically, an improvement of the presentation of the shade member 22 may be recognized in a case where the shade member 22 is formed so as to have a large size, i.e. so that a size of the shade member 22 in the front-rear direction is longer than a size thereof in the vehicle width direction.

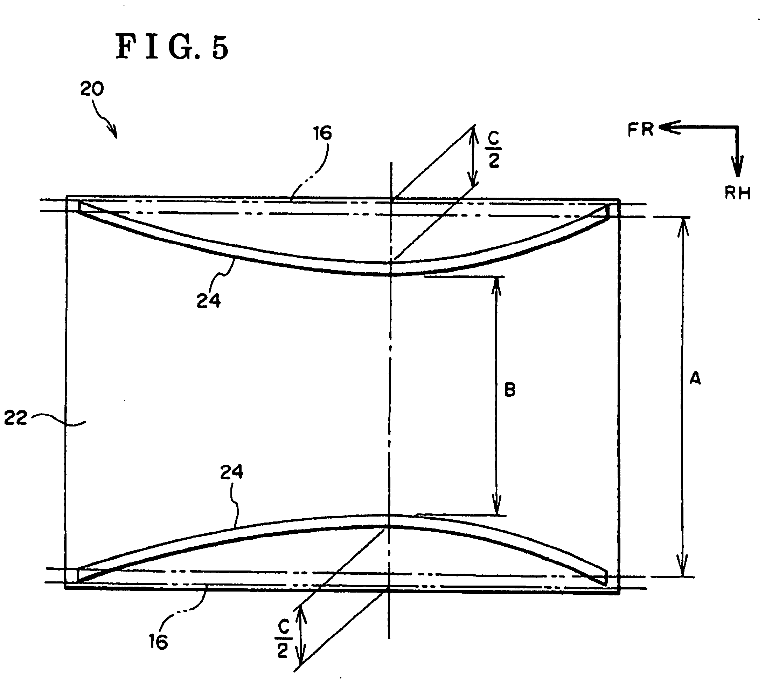

The shade apparatus for a vehicle (which will be hereinafter referred to simply as a shade apparatus 20) according to the embodiment will be described below with reference to Fig. 5. According to the shade apparatus 20, the first distance A between the rails 16 in the natural state is set to be constant. On the other hand, the second distance B between the sliding members 24 in the natural state is set to gradually change in the reel out direction of the shade member 22 (i.e. in the front-rear direction of the vehicle). In other words, the second distance B between the sliding members 24 in the natural state differs depending on positions thereof in the reel out direction of the shade member 22. For example, in Fig. 5, each of the sliding members 24 is formed so as to inwardly curve in the vehicle width direction, and the sliding members 24 are arranged symmetrically relative to the center portion of the shade member 22 in the vehicle width direction. More specifically, the first distance A between the rails 16 is set to be greater than the second distance B between the sliding members 24 by the width C in total (i.e. a most inwardly curved portion of each of the sliding members 24 is positioned inwardly of the corresponding rail 16 in the vehicle width direction by a half of the width C). Accordingly, in the case where the sliding members 24 are engaged within the corresponding guide grooves 26 of the respective rails 16, the shade member 22 is stretched in the vehicle width direction by the width C. Additionally, the width C is set in response to the tensile force necessary to be generated at the shade member 22 in the vehicle width direction.

According to the embodiment, although the first distance A between the rails 16 is set to be constant, the second distance B between the sliding members 24 is set so as to gradually change in the reel out direction of the shade member 22, so that the tensile force generated at the shade member 22 in the vehicle width direction reaches a maximum level at a portion thereof where the second distance B is the narrowest. As described above, the second distance B gradually increases from the portion of the rails 16 where the second distance B is the narrowest towards the front end portion and the rear end portion of the shade member 22 so as to approximate to the first distance A. Accordingly, the tensile force generated at the shade member 22 in the vehicle width direction gradually weakened from the portion of the shade member 22, where the second distance B is the narrowest, towards the front end portion and the rear end portion of the shade member 22. Additionally, even if the tensile force generated at the front end portion and the rear end portion of the shade member 22 in the vehicle width direction is weak, the shade member 22 is not likely to droop in the downward direction of the vehicle because the tensile force FL in the front-rear direction of the vehicle is generated at the shade member 22 (see Fig. 4).

Accordingly, the tensile force generated at the shade member 22 in the vehicle width direction may be, for example, continuously changed in the reel out direction depending on positions on the shade member 22. As a result, a sliding resistance generated between the sliding members 24 and the corresponding guide grooves 26 of the respective rails 16 becomes great at a position corresponding to a position where the tensile force generated at the shade member 22 in the vehicle width direction is great, and the sliding resistance becomes small at a position corresponding to a position where the tensile force generated at the shade member 22 in the vehicle width direction is small. Accordingly, because the sliding resistance between the sliding members 24 and the corresponding guide grooves 26 of the respective rails 16 is adjustable, chances of an occurrence of a malfunction and the like occurring when the shade member 22 is reeled and reeled out may be reduced.

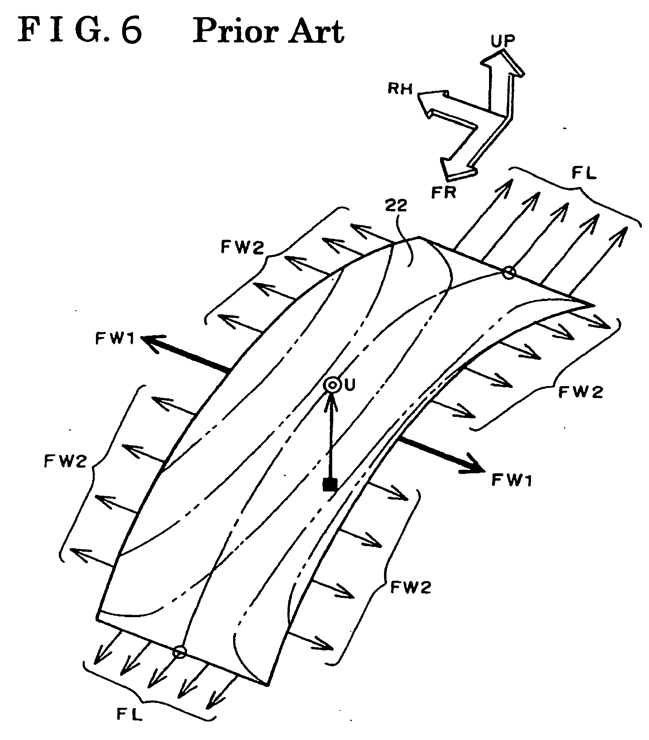

The tensile force and the advantages and merits generated by the tensile force will be described below in more detail. As illustrated in Fig. 6 in a known shade apparatus, the shade member 22 is not be deployed along the shape of the rails 16 and is likely to droop in the downward direction of the vehicle 12 along a line connecting two end portions of an arc. Accordingly, the shade member 22 may appear to droop as indicated by a contour line (see a chain double-dotted lie in Fig. 6).

However, according to the modified example of the shade apparatus 20 of the inventive embodiment, a tensile force FW2 generated at the shade member 22 in the vehicle width direction is appropriately increased, and furthermore, a tensile force FW1 is locally increased. Accordingly, the height position of the center portion of the shade member22 is pulled up in the upward direction of the vehicle 12 (i.e. in a direction indicated by an arrow U), so that the droop of the shade member 22 may be avoided. As a result, the presentation of the shade member 22 while being operated may be improved.

Additionally, a rate of the width C relative to the first distance A and the second distance B appears to be great in Figs. 3 and 5. However, the diagrams in Figs. 3 and 5 are only the schematic diagrams for facilitating the explanation about the shade apparatus (10, 20), and the rate of the width C is not limited to the rate of the width C indicated in Figs. 3 and 5.

## Claims

1. A shade apparatus (10, 20) configured so as to be assembled at a sunroof (12) of a vehicle (12), comprising:
a first rail (16) including a guide groove (26) extending in a longitudinal direction of the first rail (16);
a second rail (16) including a guide groove (26) extending in a longitudinal direction of the second rail (16) and arranged so as to keep a first distance (A) from the first rail (16) in a direction orthogonal to the longitudinal direction;
a roller shaft (18) provided at one end portions of the respective first and second rails (16) in the longitudinal direction and arranged so as to extend in the direction orthogonal to the longitudinal direction;
a shade member (22) configured so as to be reeled on the roller shaft (18) and reeled out from the roller shaft (18) when the shade member (22) is operated;
a first sliding member (24) provided at the shade member (22), arranged so as to extend in a reel out direction of the shade member (22), and being provided within the corresponding guide groove (26) to be slidable within the corresponding guide groove (26) of the first rail (16); and
a second sliding member (24) provided at the shade member (22), arranged so as to extend in the reel out direction of the shade member (22) while keeping a second distance (B) from the first sliding member (24) in an axial direction of the roller shaft (18), and being provided within the corresponding guide groove (26) to be slidable within the corresponding guide groove (26) of the second rail (16), wherein
the first distance (A) between the first and second rails (16) is set to be relatively greater at a portion of the first and second rails (16) in the longitudinal direction than the second distance (B) between the first and second sliding members (24) being in a natural state by a width (C) such that in case where sliding members (24) are engaged with the corresponding guide grooves (26) of the respective rails (16) the shade member (22) is stretched by the width (C) in the vehicle width direction, **characterized in that**
the first distance (A) between the first and second rails (16) is set to be constant and the second distance (B) between the first and second sliding members (24) in the natural state is set to gradually change depending on positions of the first and second sliding members (24) in the reel out direction of the shade member (22).

2. The shade apparatus (10, 20) according to Claim 1, wherein each of the first and second rails (16) is formed to curve in an upward direction of the vehicle (12).

## Patentansprüche

1. Lichtblende-Einrichtung (10, 20), welche dazu angepasst ist, an einem Sonnendach (12) eines Fahrzeugs (12) montiert zu werden, mit folgenden Merkmalen:
eine erste Schiene (16), umfassend eine Führungsnut (26), die sich in Längsrichtung der ersten Schiene (16) erstreckt,
eine zweite Schiene (16), umfassend eine Führungsnut (26), die sich in Längsrichtung der zweiten Schiene (16) erstreckt und so angeordnet ist, dass eine erste Distanz A zur ersten Schiene (16) in einer Richtung senkrecht zur Längsrichtung eingehalten wird,
eine Rollowelle (18), die an einen Endabschnitten von jeweils der ersten und zweiten Schiene (16) in Längsrichtung vorgesehen ist und so angeordnet ist, dass sie sich lotrecht zur Längsrichtung erstreckt,
ein Lichtblenden-Bauteil (22), das dazu angepasst ist, auf die Rollwelle (18) aufgerollt und von der Rollwelle (18) abgerollt zu werden, wenn das Lichtblenden-Bauteil (22) betätigt wird,
ein erstes Gleitbauteil (24), das am Lichtblenden-Bauteil (22) vorgesehen ist und so angeordnet ist, dass es sich in Ausrollrichtung des Lichtblenden-Bauteils (22) erstreckt, und das innerhalb der zugehörigen Führungsnut (26) vorgesehen ist, um innerhalb der entsprechenden Führungsnut (26) der ersten Schiene (16) gleitend gelagert zu sein, und
ein zweites Gleitbauteil (24) am Lichtblenden-Bauteil (22) vorgesehen ist und so angeordnet ist, dass es sich in Ausrollrichtung des Lichtblenden-Bauteils (22) erstreckt, wobei es eine zweite Distanz (B) zum ersten Gleitbauteil (24) in axialer Richtung der Rollwelle (18) einhält, sowie innerhalb der zugehörigen Führungsnut (26) vorgesehen ist, um innerhalb der zugehörigen Gleitnuten (26) der zweiten Schiene (18) gleitend gelagert zu sein, wobei
die erste Distanz (A) zwischen den ersten und zweiten Schienen (16) so eingestellt ist, dass sie an einem Abschnitt der ersten und zweiten Schienen (16) in Längsrichtung um eine Breite (C) relativ größer ist als die zweite Distanz (B) zwischen den ersten und zweiten Gleitbauteilen (24) in ursprünglichem Zustand, sodass in einem Fall, in dem die Gleitbauteile (24) mit den zugehörigen Führungsnuten (26) der entsprechenden Schienen (16) in Eingriff stehen, das Lichtblenden-Bauteil (22) in der Fahrzeuglängsrichtung um die Breite (C) gestreckt wird, **dadurch gekennzeichnet, dass**
die erste Distanz (A) zwischen den ersten und zweiten Schienen (16) so eingestellt ist, dass sie konstant ist und die zweite Distanz (B) zwischen den ersten und zweiten Gleitbauteilen (24) im ursprünglichen Zustand so eingestellt ist, dass sie sich graduell ändert in Abhängigkeit von Positionen der ersten und zweiten Gleitbauteile (24) in Abrollrichtung des Lichtblenden-Bauteils (22).

2. Lichtblende-Einrichtung (10, 20) nach Anspruch 1, wobei jede der ersten und zweiten Schienen (16) ausgeformt ist, um sich in eine Aufwärtsrichtung des Fahrzeugs (12) zu krümmen.

## Revendications

1. Dispositif pare-soleil (10, 20) configuré afin d'être assemblé sur un toit ouvrant (12) d'un véhicule (12), comprenant :
un premier rail (16) comprenant une rainure de guidage (26) s'étendant dans une direction longitudinale du premier rail (16) ;
un second rail (16) comprenant une rainure de guidage (26) s'étendant dans une direction longitudinale du second rail (16) et agencé afin de maintenir une première distance (A) par rapport au premier rail (16) dans une direction orthogonale à la direction longitudinale ;
un axe d'enroulement (18) prévu au niveau d'une partie des premier et second rails (16) respectifs dans la direction longitudinale et agencé afin de s'étendre dans la direction orthogonale à la direction longitudinale,
un élément pare-soleil (22) configuré pour être enroulé sur l'axe d'enroulement (18) et déroulé de l'axe d'enroulement (18) lorsque l'élément pare-soleil (22) est actionné ;
un premier élément coulissant (24) prévu au niveau de l'élément pare-soleil (22), agencé afin de s'étendre dans une direction de déroulement de l'élément pare-soleil (22), et étant prévu à l'intérieur de la rainure de guidage (26) correspondante pour pouvoir coulisser dans la rainure de guidage (26) correspondante du premier rail (16) ; et
un second élément coulissant (24) prévu au niveau de l'élément pare-soleil (22), agencé afin de s'étendre dans la direction de déroulement de l'élément pare-soleil (22) tout en maintenant une seconde distance (B) par rapport au premier élément coulissant (24) dans une direction axiale de l'axe d'enroulement (18), et étant prévu dans la rainure de guidage (26) correspondante pour pouvoir coulisser à l'intérieur de la rainure de guidage (26) correspondante du second rail (16), dans lequel :
une première distance (A) entre les premier et second rails (16) est déterminée pour être relativement plus importante au niveau d'une partie des premier et second rails (16) dans la direction longitudinale que la seconde distance (B) entre les premier et second éléments coulissants (24) qui sont dans un état naturel selon une largeur (C) de sorte que dans le cas dans lequel les éléments coulissants (24) sont mis en prise avec les rainures de guidage (26) correspondantes des rails (16) respectifs, l'élément pare-soleil (22) est étiré par la largeur (C) dans le sens de la largeur du véhicule, **caractérisé en ce que** :
la première distance (A) entre les premier et second rails (16) est déterminée pour être constante et la seconde distance (B) entre les premier et second éléments coulissants (24) à l'état naturel, est déterminée pour changer progressivement en fonction des positions des premier et second éléments coulissants (24) dans la direction de déroulement de l'élément pare-soleil (22).

2. Dispositif pare-soleil (10, 20) selon la revendication 1, dans lequel chacun des premier et second rails (16) est formé pour s'incurver dans une direction ascendante du véhicule (12).
